# EUROPEAN PATENT APPLICATION

(11) **EP 4 332 639 A1**
(43) Date of publication of application: **06.03.2024**
(21) Application number: 22193667.7
(22) Date of filing: 02.09.2022
(51) Int. Cl.: G01V 3/10

(54) **METAL DETECTION APPARATUS**

(71) Applicant: Mettler-Toledo Safeline Limited, Salford Manchester M50 2XD (GB)
(72) Inventor: LYON, David, Cheadle, SK8 5QH (GB)
(74) Representative: Leinweber & Zimmermann

(57) **Abstract**

The metal detection apparatus comprises a balanced coil system with a transmitter coil (21) connected with a first coil terminal (211) and a second coil terminal (212) to a transmitter unit and with a first and a second receiver coil connected to an input of a receiver unit, whose output is connected to a signal processing unit, whose transmitter unit comprises a controllable frequency generator that provides an input signal with a selectable operating frequency to the input of an amplifier stage, whose output is connected to an excitation unit (14), which comprises a coupling transformer (143) with at least one input winding and at least one output winding having a terminal tapping (143T) and a plurality of intermediate tappings (143A, 143B, 143C) and which comprises a plurality of tuning capacitors (144A, 144B, 144C) and which comprises switching devices (141A, 142A; 141B, 142B; 141C, 142C), with which the output winding of the coupling transformer (143) and at least one of the tuning capacitors (144A, 144B, 144C) is connectable to the transmitter coil (21). According to the invention, a plurality of individually selectable excitation circuits is provided, each excitation circuit, when selected, comprising the transmitter coil (21), tapped windings of the output winding of the coupling transformer (143), one of the tuning capacitors (144A, 144B, 144C) connected to one another by a first semiconductor switching device (141A; 141B; 141C) and by a second switching device (142A; 142B; 142C) designed as an electromechanical relay, which are controllable by a channel selector (140) such that always one of the excitation circuits is selectable.

## Description

### Technical Field

The current invention relates to a metal detection apparatus that uses a plurality of operating frequencies.

### Background Art

An industrial metal detection apparatus as described for example in US8587301B2, is used for detecting metal contamination in a product. When properly installed and operated, it will help reducing metal contamination and improving food safety. Most modern metal detectors utilise a search head comprising a "balanced coil system". Detectors of this design are capable of detecting all metal contaminant types including ferrous, nonferrous and stainless steels in a large variety of products such as fresh and frozen products.

A metal detection apparatus that operates according to the "balanced coil"-principle comprises three coils, a transmitter coil and two identical receiver coils that are wound onto a non-metallic frame, each typically parallel with the other. Since the receiver coils, which typically enclose the transmitter coil centred in between, are identical, an identical voltage is induced in each of them. In order to receive an output signal that is zero when the system is in balance, the first receiver coil is connected in series with the second receiver coil having an inversed sense of winding. Hence, the voltages induced in the receiver coils, which are of identical amplitude and inverse polarity, are cancelling out one another in the event that the system is in balance and no contaminant is present in an observed product.

However, as soon as a particle of metal passes through the coil arrangement and is exposed to the magnetic field, Eddy currents are forced to flow in the metal particle. Eddy currents produce a secondary magnetic field, which disturbs the primary electromagnetic field first near one receiver coil and then near the other receiver coil. While the particle of metal is conveyed through the receiver coils, the voltage induced in each receiver coil is changed (by nano-volts). This change in balance results in a signal at the output of the detection coils that in a receiver unit can be processed, amplified, possibly filtered and subsequently be used to detect the presence of metal contaminant in observed products that are traversing the metal detection apparatus on a conveyor system.

In the receiver unit the input signal is normally split into an in-phase component and a quadrature component. The vector composed of these components has a magnitude and a phase angle, which is typical for the products and the contaminants that are conveyed through the coil system. In order to identify a metal contaminant, "product effects" need to be removed or reduced. If the phase of the product is known, then the corresponding signal vector can be reduced so that a higher sensitivity results for the detection of signals originating from metal contaminants.

Methods applied for eliminating unwanted signals from the signal spectrum exploit the fact that metal contaminants, products and other disturbances have different influences on the magnetic field so that the detected signals differ in phase. Materials with a high conductivity cause signals with a higher negative reactive signal component and a smaller resistive signal component. Materials with a high magnetic permeability cause signals with a smaller resistive signal component and a higher positive reactive signal component. Signals caused by ferrite are primarily reactive, while signals caused by stainless steel are primarily resistive. Products, which are conductive, typically cause signals with a strong resistive component. The phase angle of the signal vectors between the resistive signal component and reactive signal component remains normally constant, when a product or contaminant is conveyed through the metal detection apparatus.

Distinguishing between the phases of the signal components of different origin by means of a phase detector allows obtaining information about the product and the contaminants. A phase detector, e.g. a frequency mixer or analogue multiplier circuit, generates a voltage signal which represents the difference in phase between the signal input, such as the output signal of the receiver coils, and a reference signal provided by the transmitter unit to the receiver unit. Hence, by selecting the phase of the reference signal to coincide with the phase of the product signal component, a phase difference and a corresponding product signal is obtained at the output of the phase detector that is zero. In the event that the phase of the signal that originates from a contaminant differs from the phase of the product signal, then the product signal can be suppressed while the signal of the contaminant can be further processed. However, in the event that the phase of the signal of the contaminant is close to the phase of the product signal, then the detection of contaminant fails, since the signal of the contaminant is suppressed together with the product signal. In order to separate the phase angle of a product signal from the phase angle of a contaminant, a suitable operating frequency is determined and applied.

US8841903B2 discloses a metal detection apparatus, which comprises a transmitter unit that provides transmitter signals to a transmitter coil that is inductively coupled to a first and a second receiver coil, which are connected to a receiver unit connected to a signal processor. The transmitter unit comprises a frequency generator that provides an operating frequency to the input of an amplifier stage, whose output is connected via a coupling transformer to the transmitter coil. The output of the amplifier stage is connected via a first switch bank to a first tapping and the transmitter coil is connected via a second switch bank to a second tapping of the same transformer winding of the transformer. With this arrangement a resonant circuit, which consists of the transmitter coil and the selectable capacitors, can be tuned independently of other parts of the transmitter unit to a selected operating frequency. The amplifier stage comprises a class A circuit that amplifies signals with minimum distortion, but with low efficiency since the power transistor consumes current continuously even in the quiescent state.

US10184908B2 discloses a metal detection apparatus with a coupling transformer that comprises a primary coil with a first winding and a second winding, which are connected to the output of the amplifier stage, and a secondary coil that is connected to the transmitter coil. The first and second windings are connected with a first end to a supply voltage and have each at least one tapping at a same turn number counted from said first end. The amplifier stage comprises a first amplification wing with at least a first power transistor connected to the at least one tapping of the firstwinding and a second amplification wing with at least a second power transistor connected to the at least one tapping of the second winding. The first amplification wing amplifies the first half wave and the second amplification wing amplifies the second half wave of an input signal. The secondary coil of the coupling transformer comprises a plurality of tappings. A first end of the transmitter coil is connected to one of these tappings and the second end of the transmitter coil is selectively connectable via a switch to another one of the tappings. With this arrangement the transmitter coil can be adapted in a wider range to the amplifier stage. Connected with tuning capacitors the transmitter coil forms a resonant circuit that can be tuned. The first end of the transmitter coil is selectively connectable via a switch to one side of one of the tuning capacitors and the second end of the transmitter coil is connected directly or via a plurality of turns of the secondary winding to the other side of the tuning capacitors.

A problem of such a metal detection apparatus is that changing the system from a first tuned state to a second tuned state requires considerable time so that changing the operating frequency forth and back and maintaining optimal tuning while detecting contaminants in a conveyed product is scarcely possible.

US20150234075A1 discloses a method for compensating imbalances in the coil system and for suppressing the influence of vibrations and noise. The metal detection apparatus is calibrated to suppress signals caused by ferrite, which resemble the signals originating from noise. Consequently, by eliminating signals originating from ferrite, signals caused by vibration and noise are automatically suppressed as well. According to this method the output signal of the metal detection apparatus is measured in the presence of ferrite within the coil system and digitally adjusted so that the resistive signal component of the ferrite is eliminated. While the described method for compensating imbalances and for suppressing vibrations and noise is highly efficient, random disturbances caused by the transmitter unit itself may still cause problems.

EP4033272A1 relates to a metal detection apparatus comprising: a balanced coil system including a transmitter coil, a first receiver coil and a second receiver coil; a coupling transformer including an input winding energized by an input signal with a selected operating frequency and an output winding including multiple tappings, each pair of tappings selectable among the multiple tappings defining an associated partial winding consisting of the turns of the output winding that extend between the tappings of the selected pair; a first plurality of individually selectable excitation circuits, each of the excitation circuits being configured for energization of the transmitter coil from an associated one of the partial windings and including an associated first switching device connected so as to open and close the associated excitation circuit in response to an associated first control signal, each of the first switching devices being a semiconductor switching device, a second plurality of individually selectable tuning capacitors, each of the tuning capacitors having a second switching device associated therewith connected so as to open or close a resonance circuit including the transmitter coil and the associated tuning capacitor in response to an associated second control signal.

In this prior art metal detection apparatus that is tuneable to a plurality of operating frequencies, both the first and second switching devices used for tuning are designed as semiconductor switching devices. It has been realised by the inventor within the context of his investigations that the tunability of this prior art apparatus is not optimum for certain operating frequencies and/or certain perimeters of the aperture of the metal detection apparatus that is traversed by the observed products on the conveyor system.

The present invention is therefore based on the object of optimising the tunability of a metal detection apparatus of the above referenced type. Furthermore, the metal detection apparatus shall be redesigned in such a way that random disturbances caused by the transmitter unit, which are difficult to handle by the electronic compensation system, shall be reduced or avoided. Still further, thermal losses that may cause imbalances shall be reduced.

This problem is according to the invention solved in that each of the second switching devices is an electro-mechanical relay switching device.

The use of electro-mechanical relay switching devices, specifically sub-miniature high current electro-mechanical relay switches that switch the tuning capacitors, overcomes the problems described above. These problems are believed to be due to the channel capacitance and the drain-source on resistance of the semiconductor switching devices used in the prior art apparatus as the second switching devices. In contrast, there are no corresponding problems with the first switching devices being semiconductor switching devices due to their lower drain-source voltage.

Preferably, the electro-mechanical relay switching devices are configured as double pole with contacts connected in parallel. Thereby, vibration susceptibility is reduced.

In another preferred embodiment the number of partial windings is higher than the number of excitation circuits and a multi-way tap-selector is arranged between the tappings and the excitation circuits so as to establish individual connections between the excitation circuits and selected ones of said partial windings. The tap selector allows for the selection of a number of partial windings among the total number of partial windings that is available depending on the total number of tappings with the number of selected partial windings corresponding to the number of available excitation circuits. This will allow consistent high detector sensitivities to be achieved in all frequency modes.

According to the invention a plurality, preferably two, three or more, of individually selectable excitation circuits is provided, each excitation circuit, when selected, comprising the transmitter coil, one of the partial windings of the output winding of the coupling transformer, one of the tuning capacitors connected to one another by a first semiconductor switching device and by a second switching device, which are controllable by a channel selector such that always one of the excitation circuits is selectable.

The individually selectable excitation circuits are arranged in parallel such that they do not interact with one another. Hence, a selected excitation circuit is not interfered by in the circuitry of the other selectable excitation circuit. Hence, precise tuning of the selected excitation circuit is not impaired by the remaining circuitry.

In preferred embodiments for each excitation circuit, when selected, the associated partial windings of the output winding of the coupling transformer are connected by the associated first semiconductor switching device in series or in parallel to the transmitter coil. The transmitter coil is connected with one of its coil terminals, switchable or firmly, with one of the tappings, especially with a terminal tapping of the transformer output winding. Generally, the turns of the transformer output winding between a pair of selected transformer tappings are defined as "partial winding". Preferably, for each excitation circuit, when selected, the associated tuning capacitor is connected by the associated second switching device in series or in parallel to the transmitter coil. With the connection of the partial windings and the tuning capacitors in series or in parallel, excitation circuits with different properties can be created.

Most preferably, for each excitation circuit, when selected, the associated partial winding of the output winding of the coupling transformer and the associated tuning capacitor are connected by the associated first and second switching devices each in parallel to the transmitter coil.

The inventive metal detection apparatus can not only switch operating frequencies but can maintain optimal tuning for each selected operating frequency when switched forth and back in short intervals. Hence, the inventive metal detection apparatus can be equipped with an operating program that allows switching and tuning within short time intervals practically without interruption of the measurement process. Hence, the operating program may be designed such that changes of the operating frequency are performed while measurement of an object in order to detect contaminants is in progress. Changing the operating frequency allows detecting signals from various sorts of contaminants and products. Maintaining optimal tuning allows measuring signals with highest signal-to-noise ratio.

Semiconductor switching devices, which preferably comprise at least one MOS-FET allow switching between intervals of approximately 20 ns and have a small channel resistance of typically below 0.010 Ohm. Hence, warming of contacts and corresponding losses with undesired impact on the circuitry as experienced with power relays are avoided. Further, suitable semiconductor switching devices are capable to block voltages of up to 150V and to support currents of up to 10A or more.

However, power relays are considered more robust against high voltage oscillations, wherefore such power relays where integrated into the transmitter circuit. The inventive transmitter is therefore designed accordingly. In preferred embodiments, the channel selector comprises for each one of the first semiconductor switching devices at least one isolated driver, such as a photovoltaic driver, whose input lines and output lines are galvanically separated from one another. Hence, the control circuitry is isolated from the power stage.

Preferably, the first semiconductor switching devices are bi-directional-MOS-FET units. Each bi-directional-MOS-FET unit preferably comprises a first MOS-FET and a second MOS-FET, each having a source terminal, a drain terminal and a gate terminal. The two matched MOS-FETs are preferably provided with the source terminals connected on the one hand with one another and on the other hand with identical first terminals of two diodes, which are connected each with their second terminal to the drain terminal of the first MOS-FET or the second MOS-FET, respectively.

The two MOS-FETs, which are connected in series and are pointing in opposite directions, have four possible states ON-ON, ON-OFF, OFF-ON, and OFF-OFF. For activating an excitation circuit, the two MOS-FETs of the associated first semiconductor switching devices are both switched on and for deactivating the excitation circuit the two MOS-FETs of the associated first semiconductor switching devices are both switched off. When switched on, current can flow in both directions through the circuit. In one direction the current flows through the first MOS-FET and the associated first diode and in the other direction through the second MOS-FET and the associated second diode. When switched off current cannot flow in either direction, because with both FETs off the two diodes are blocking current flow in either direction.

The output lines of the isolated drivers are connected to the input terminals of the first semiconductor switching devices of the associated selectable excitation circuits, respectively. The control voltage is applied to the interconnected gate terminals and typically the source terminals of the MOS-FETs.

In a particularly preferred embodiment, the light emitting diodes of the isolated drivers are connected each or together in series with a control resistor. Hence, the light emitting diode or the light emitting diodes connected in series with the control resistor form a control loop that is connected to the output of a constant voltage supply device, preferably a low dropout regulator. This circuitry has further advantages, and allows temperature stabilization of the MOS-FETs. The voltage across the light emitting diodes of the isolated drivers and the control resistor is fixed. With increasing temperature, the voltage across the light emitting diodes drops and the voltage across the control resistor and the current through the control resistor increase proportionally. The higher current causes the light emitting diodes to emit more light towards the light sensitive diode(s) provided in the isolated drivers. Consequently, the control voltage applied to the MOS-FETs increases causing the channel resistance of the MOS-FETs, which has risen with temperature, to decrease again. The channel resistance of the MOS-FETs is therefore kept constant while the temperature is changing.

### Brief description of drawings

Detailed aspects and examples of the invention are described below with reference to the drawings, wherein
- Fig. 1: shows an essential part of a preferred embodiment of an inventive metal detection apparatus; and
- Fig. 2: schematically illustrates the operating principle of a multi-way tap-selector used in the metal detection apparatus of Fig. 1.

### Description of embodiments

A preferred embodiment of an inventive metal detection apparatus generally comprises a transmitter unit, a balanced coil system with a transmitter coil and a first and a second receiver coil, a receiver unit and a control unit, which comprises an operating program implemented in a computing device, a signal processing device such as a digital signal processor and input and output devices, with which the metal detection apparatus and the implemented measurement and calibration processes are monitored and controlled, and a conveyor, on which products are transferable through the balanced coil system.

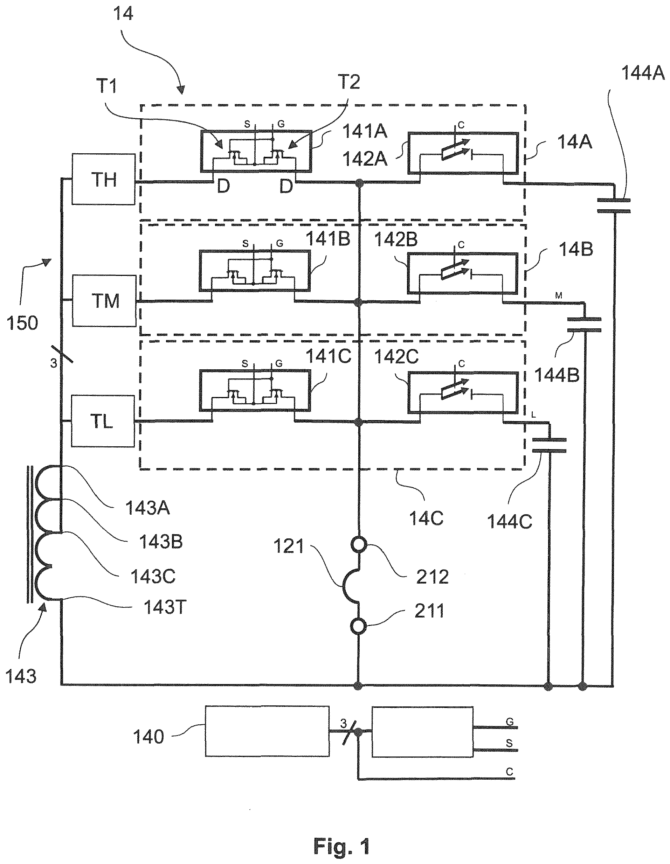

The transmitter unit comprises a controllable frequency generator that provides an input signal r0° with a selectable operating frequency to the input of an amplifier stage, whose output is connected to an excitation unit 14, that is illustrated in Fig. 1. The excitation unit 14 comprises a plurality of tuning capacitors 144A, 144B, 144C and a coupling transformer 143 with at least one input winding and at least one output winding having tappings 143T at both ends of the winding and a plurality of intermediate tappings 143A, 143B, 143C therebetween. The output lines of the amplifier stage are connected symmetrically to suitable tappings of the primary winding of the coupling transformer 143. The configuration of the amplifier stage may be designed to operate in any suitable mode such as in class A or class B mode. In the present configuration the amplifier operates in class B mode applying one half wave to one of the tappings and the other half wave to the other one of the tappings.

The tapping 143T is connected to the first terminal 211 of the transmitter coil 21 and the second terminal 212 of the transmitter coil 21 is connectable to one of the tappings 143A, 143B, 143C. The turns of the output winding of the coupling transformer 143 that extend between any selected pair of tappings 143A, 143B, 143C, 143T are defined as "partial windings".

During operation of the metal detection apparatus an excitation signal is applied to the transmitter coil 21 of the balanced coil system. Further, the transmitter unit provides an in-phase reference signal r0° and a quadrature reference signal r90° to the receiver unit. The excitation signal induces signals in the identical receiver coils (not shown in Fig. 1) which signals are of inverse polarity and of the same magnitude as long as the system is in balance, i.e., as long as no product, particularly no product contaminated with metal is traversing the coil system. In the event that a product, particularly a product contaminated with an electroconductive object is traversing the coil system, then the magnitudes of the signals induced in the identical receiver coils will change and the inversely polarized signals will no longer compensate one another. As a result, the signal induced in the receiver coils gets modulated with a baseband signal, whose amplitude and frequency depend on the property, dimension and travelling speed of the electroconductive object.

The output signals of the receiver coils are applied to a matching unit, for example comprising a balanced transformer with center-tapped primary windings that mirror the receiver coils and two identical center-tapped secondary windings whose opposite tails are connected to an amplifier. The output of the amplifier is connected to a demodulation unit, which provides at its outputs the in-phase and quadrature components of the demodulated receiver signal, i.e., the in-phase and quadrature components of the baseband signal, which originates from conveyed products. The in-phase and quadrature components of the baseband signal provided at the outputs of the demodulation unit are converted in analogue to digital converter from analogue form to digital form. The output signals of the analogue to digital converters are forwarded to a signal processing unit, such as a known digital signal processor, provided in the control unit. The signal processing unit suppresses signal components originating from the product and processes signal components originating from contaminants. The receiver unit may further comprise filter units and gain adjustment units.

The measurement process is controlled by an operating program provided in the control unit. In this way, operating frequencies are selected according to the planned measurement process and the excitation unit 14 is configured according to the selected operating frequencies.

The excitation unit 14 is provided with first semiconductor switching devices 141A, 141B, 141C and second switching devices 142A, 142B, 142C, which are controllable by a channel selector 140 such that always one of a plurality of excitation circuits 14A; 14B; 14C is selectable. The channel selector 140, which receives commands from the control unit, is designed such that the first semiconductor switching devices 141A, 141B, 141C and the second switching devices 142A, 142B, 142C of only one of the excitation circuits 14A; 14B; 14C are activated. For example, the uppermost excitation circuit 14A is activated by actuating the first semiconductor switching device 141A and the second switching device 142A, while the remaining first semiconductor switching devices 141B, 141C and the second switching devices 142B, 142C are switched off. If the first semiconductor switching device 141B and the second switching device 142B of the second excitation circuit 14B are activated, then the first semiconductor switching devices 141A, 141C and the second switching devices 142A, 142C are switched off. If the first semiconductor switching device 141C and the second switching device 142C of the third excitation circuit 14C are activated, then the first semiconductor switching devices 141A, 141B and the second switching devices 142A, 142B are switched off. Hence, the metal detection apparatus in the shown embodiment comprises three excitation circuits 14A; 14B; 14C, which comprise each a pair of first and second switching devices 141A, 142A; 141B, 142B; 141C, 142C. In other embodiments, the metal detection apparatus may comprise instead of three excitation circuits 14A, 14B, 14C, two, four or more excitation circuits 14A, 14B, 14C, ··· .

Each one of the excitation circuits 14A, 14B, 14C, when selected, comprises the transmitter coil 21, one of the tuning capacitors 144A, 144B, 144C and one of the partial windings of the output winding of the coupling transformer 143. In the present embodiment, the associated tuning capacitor 144A; 144B or 144C and the partial winding of the output winding of the coupling transformer 143 are connected in parallel to the transmitter coil 21, when the associated pair of first and second devices 141A, 142A; 141B, 142B; 141C, 142C is activated.

The first coil terminal 211 of the transmitter coil 21 is fixedly connected to the tapping 143T of the output winding of the coupling transformer 143 and to a first terminal of the tuning capacitors 144A, 144B, 144C. The second coil terminal 212 of the transmitter coil 21 is fixedly connected to a common first terminal of each pair of the first and second switching devices 141A, 142A; 141B, 142B; 141C, 142C. By the first semiconductor switching devices 141A, 141B, 141C the second terminal 212 of the transmitter coil 21 is connectable to one of the transformer tappings 143A, 143B, 143C. The partial windings of the output winding of the coupling transformer 143 between the selected tapping 143A, 143B, 143C and the terminal tapping 143T are therefore connectable in parallel to the transmitter coil 21. By the second switching devices 142A, 142B, 142C the second terminal 212 of the transmitter coil 21 is connectable to the second terminal of the tuning capacitors144A, 144B, 144C. The tuning capacitors 144A, 144B, 144C are therefore connectable in parallel to the transmitter coil 21. However, the channel selector 140 is preferably designed such, that only one pair of the first and second switching devices 141A, 142A; 141B, 142B; 141C, 142C is activated at a time. With the control signals applied from the control unit to the of the channel selector 140 one of the excitation circuits 14A, 14B, 14C is selectable in order to tune the balanced coil system to the operating frequency selected by the control unit.

Hence, with each change of the operating frequency selected with control signals of the control unit the associated excitation circuit 14A, 14B or 14C is preferably automatically selected as well. Hence, not only changing of the operating frequency, but also tuning of the balanced coil system can be performed within the shortest possible time depending on the switching speed of the first and second switching devices 141A, 142A; 141B, 142B; 141C, 142C. It is therefore possible to change the operating frequency and the tuning of the balanced coil system forth and back in short intervals during the measurement process.

The excitation circuits 14A, 14B, 14C are individually selected and deselected, so that the selected excitation circuit 14A, 14B or 14C is not impaired by elements of the deselected excitation circuit 14A, 14B or 14C. The excitation circuits 14A, 14B, 14C are practically arranged in parallel and have only the transmitter coil 21 and a part of that output winding of the coupling transformer 143 in common. With this design it is possible to reliably suppress interferences of the elements of the deactivated excitation circuits 14A, 14B; 14A, 14C; 14B, 14C with the activated excitation circuit 14A or 14B or 14C.

The first switching devices 141A, 141B, 141C are preferably MOS-FET circuits, which together with the channel selector 140 are described below in further detail.

The channel selector 140 is schematically represented at the bottom of Fig. 1. The channel selector 140 provided with the excitation unit 14 comprises for each one of the selectable excitation circuits 14A, 14B, 14C identical channel selector modules. The first semiconductor switching devices 141A are preferably provided in the form of bi-directional-MOS-FET units. Each bi-directional-MOS-FET unit 141A, 141B, 141C comprises a first MOS-FET T1 and a second MOS-FET T2, each having a source terminal S, a drain terminal D and a gate terminal G. The source terminals S of the MOS-FETs T1 and T2 are connected on the one hand with one another and on the other hand with identical first terminals, i.e., the anodes, of a first diode and a second diode (not shown in Fig. 1), which are connected each with their second terminal, i.e., the cathode, to the drain terminal D of the first MOS-FET T1 or the second MOS-FET T2, respectively. The two MOS-FETs T1 and T2, which are connected in series and are pointing in opposite directions, have four possible states ON-ON, ON-OFF, OFF-ON, and OFF-OFF, but are switched ON and OFF always pairwise. For activating the first excitation circuit 14A the MOS-FETs T1 and T2 of the associated first semiconductor switching devices 141A, 141B, 141C are both switched on and for deactivating the first excitation circuit 14A the associated two MOS-FETs T1 and T2 of the associated first semiconductor switching devices 141A, 141B, 141C are both switched off. When switched on, current can flow in both directions through the MOS-FET circuits. In one direction the current flows e.g., through the first MOS-FET T1 and through the associated first diode and in the other direction through the second MOS-FET T2 and the associated second diode. When switched off, current cannot flow in either direction, because with both MOS-FETs T1 and T2 off the two diodes, which are facing with their cathodes in opposite directions, are blocking current flow in either direction. The two MOS-FETs T1 and T2 and the two diodes are matched with one another, so that the required current, which is typically in the range or higher than 10A, can flow in both directions.

Each of the channel selector modules, e.g., module 140A comprises for the first semiconductor switching device 141A an isolated driver, with which control lines of the channel selector 140 are galvanically isolated from control inputs of the semiconductor switching devices 141A. The isolated drivers are preferably optically isolated MOS-FET drivers each comprising a light emitting diode and a light sensitive diode and preferably an internal or external turn off circuit used for increasing the overall switching speed by decreasing the turn-off time. The required current to drive its internal circuitry is preferably derived from the LED current on the low voltage primary side of the isolation barrier or the input lines of the isolated drivers. The output lines provided on the secondary side of the isolation barrier of the isolated drivers are connected to the input terminals G, S of the associated semiconductor switching device 141A. Further, a separate control signal for switching between ON and OFF states of the associated second switching device 142A, 142B, 142C is applied to a control input terminal C of each of these devices.

The first input terminal G is connected to the gate terminals of the two MOS-FETs T1 and T2. The second input terminal S is connected to the source terminals of the two MOS-FETs T1 and T2. Both MOS-FETs T1 and T2 of each semiconductor switching device 141A are therefore simultaneously switched on and off.

The light emitting diodes of the isolated drivers are further connected in series with a control resistor thus forming a control loop that is connected to the output of a constant voltage supply device. This circuitry allows temperature stabilization of the MOS-FETs T1 and T2 of the semiconductor switching devices 141A, 141B, 141C. The voltage across the light emitting diodes of the isolated drivers and the control resistor is fixed by the constant voltage supply device. With increasing temperature, the voltage across the light emitting diodes drops and the voltage across the control resistor and the current through the control resistor increase accordingly. The higher current causes the light emitting diodes to emit more light towards the light sensitive diodes provided in the isolated drivers. Consequently, the control voltage applied to the MOS-FETs T1 and T2 of the semiconductor switching devices 141A, 141B, 141C increases accordingly, causing the channel resistance of the MOS-FETs T1 and T2, which has risen with temperature, to decrease again. The channel resistance of the MOS-FETs T1 and T2 is therefore kept constant while the temperature is changing. Changes of temperature has therefore no effect on currents flowing in an activated excitation circuit 14A, 14B, 14C. Due to the extremely low channel resistance of the MOS-FETs T1 and T2, when switched on, temperature losses and an adverse impact of this circuitry of the metal detection apparatus are small, thus reducing the requirement of correction.

The constant voltage supply device has an input for a supply voltage VCC and a control input EN to which the control signal from the signal processing device is applied, which changes for example between the potential of the supply voltage VCC and ground potential. When ground potential is applied, current can flow through the control loop to ground or ground potential applied to the control input EN. The voltage applied by the constant voltage supply device to the control loop is kept constant.

The constant voltage supply device is preferably a low dropout regulator which can regulate the output voltage supplied to the control loop even when the supply voltage VCC is very close to this output voltage.

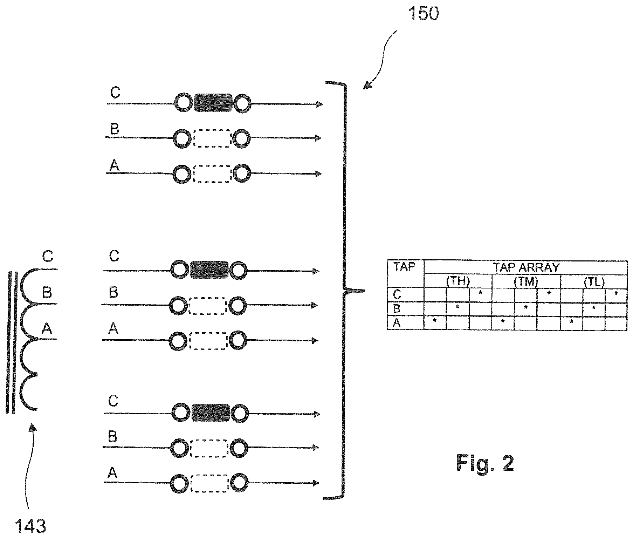

Depending on the number of tappings of the output winding of the coupling transformer 143, the number of available partial windings may be higher than the number of excitation circuits, for example the three excitation circuits 14A, 14B, and 14C in Fig. 1. In this case, as is symbolically illustrated in Fig. 1, a multi-way tap-selector 150 may be arranged between the tappings 143A, 143B, 143C ··· so as to selectively establish connections between the available excitation circuits 14A, 14B, 14C and the corresponding selection of available partial windings. Thereby, the multi-way tap-selector may be used to feed the excitation circuits 144A, 144B, 144C from varying selections of partial windings. This is schematically illustrated in Fig. 2 which shows a three-way tap-selector having three tap-selector links A, B, C for selective coupling to a corresponding subset of tappings of the output winding of the coupling transformer 143. The designations "TH", "TM", and "TL" appearing in Figs. 1 and 2 indicate that the selected excitation circuits 14A, 14B, 14C are tuned to a high, medium and low frequency, respectively.

### Reference signs list

- 14: excitation unit
- 14A, 14B, 14C: selectable excitation circuits
- 140: channel selector
- 140A: channel selector module for excitation circuit 14A
- 141A, 141B, 141C: first semiconductor switching devices
- 142A, 142B, 142C: second switching devices
- 143: coupling transformer
- 143A, 143B, 143C: transformer tappings of the output winding
- 143T: terminal tapping of the output winding
- 144A, 144B, 144C: tuning capacitors
- 21: transmitter coil
- 211, 212: terminals of the transmitter coils
- T1, T2: MOS-FETs of the semiconductor switching devices
- 150: multi-way tap-selector
- D: Drain terminal
- S: Source terminal
- G: Gate terminal
- C: Control input terminal

## Claims

1. Metal detection apparatus comprising:
a balanced coil system including a transmitter coil (21), a first receiver coil and a second receiver coil;
a coupling transformer (143) including an input winding energized by an input signal with a selected operating frequency and an output winding including multiple tappings (143A, 143B, 143C, 143T), each pair of tappings selectable among the multiple tappings (143A, 143B, 143C, 143T) defining an associated partial winding consisting of the turns of the output winding that extend between the tappings of the selected pair;
a first plurality of individually selectable excitation circuits, each of the excitation circuits being configured for energization of the transmitter coil (21) from an associated one of the partial windings and including an associated first switching device connected so as to open and close the associated excitation circuit in response to an associated first control signal, each of the first switching devices being a semiconductor switching device,
a second plurality of individually selectable tuning capacitors, each of the tuning capacitors having a second switching device associated therewith connected so as to open or close a resonance circuit including the transmitter coil (21) and the associated tuning capacitor in response to an associated second control signal,
**characterised in that**
each of the second switching devices is an electro-mechanical relay switching device.

2. Metal detection circuit according to claim 1, **characterised in that** the number of partial windings is higher than the number of excitation circuits and a multi-way tap-selector is arranged between the tappings (143A, 143B, 143C, 143T) and the excitation circuits so as to establish individual connections between the excitation circuits and selected ones of said partial windings.

3. Metal detection apparatus according to anyone of claims 1 or 2, **characterised in that** the electro-mechanical relay switching device is configured as double pole with contacts connected in parallel.

4. Metal detection apparatus according to anyone of the preceding claims, **characterised in that**
for each excitation circuit (14A; 14B; 14C), when selected, the associated partial winding of the secondary coil of the coupling transformer (143) is connected by the associated first semiconductor switching device (141A; 141B; 141C) in series or in parallel to the transmitter coil (21).

5. Metal detection apparatus according to anyone of the preceding claims, **characterised in that**
for each excitation circuit (14A; 14B; 14C), when selected, the associated tuning capacitor (144A; 144B; 144C) is connected by the associated second switching device (142A; 142B; 142C) in series or in parallel to the transmitter coil (21).

6. Metal detection apparatus according to anyone of the preceding claims, **characterised in that**
for each excitation circuit (14A; 14B; 14C), when selected, the associated partial winding of the secondary coil of the coupling transformer (143) is connected by the associated first switching device (141A; 141B; 141C) and the associated tuning capacitor (144A; 144B; 144C) is connected by the associated second switching device (142A; 142B; 142C) each in parallel to the transmitter coil (21).

7. Metal detection apparatus according to anyone of the preceding claims, **characterised in that**
the plurality of individually selectable excitation circuits (14A; 14B; 14C) are arranged in parallel.

8. Metal detection apparatus according to anyone of the preceding claims, **characterised in that**
the first and second control signals are generated by a channel selector (140) comprising for each one of the first switching devices (141A; 141B; 141C) and the second switching devices (142A; 142B; 142C) at least one isolated driver (145A, 146A), such as a photovoltaic driver, with which control lines are galvanically isolated from control inputs of the first switching devices (141A; 141B; 141C) and the second switching devices (142A; 142B; 142C).

9. Metal detection apparatus according to anyone of the preceding claims, **characterised in that**
the first switching devices (141A; 141B; 141C) are bi-directional-MOS-FET units.

10. Metal detection apparatus according to claim 9, **characterised in that** each bi-directional-MOS-FET unit comprises a first MOS-FET (T1) and a second MOS-FET (T2), each having a source terminal (S), a drain terminal (D) and a gate terminal (G), with the source terminals (S) connected on the one hand with one another and on the other hand with identical first terminals of two diodes (D1, D2), which are connected each with their second terminal to the drain terminal (D) of the first MOS-FET (T1) or the second MOS-FET (T2), respectively.

11. Metal detection apparatus according to anyone of claims 9 or 10, **characterised in that** the input lines of the isolated drivers assigned to the first switching device (141A; 141B; 141C) and the second switching device (142A; 142B; 142C) of the associated selectable excitation circuit (14A; 14B; 14C), respectively, which are connected each to a light emitting diode, are connected in series and that the output lines of the isolated drivers are connected to the input terminals (G, S) of the first switching device (141A; 141B; 141C) and the second switching device (142A; 142B; 142C) of the associated selectable excitation circuit (14A; 14B; 14C), respectively.

12. Metal detection apparatus according to claim 11, **characterised in that** the light emitting diodes of the isolated drivers are connected in series with a control resistor thus forming a control loop that is connected to the output of a constant voltage supply device.

13. Metal detection apparatus according to claim 12, **characterised in that** the constant voltage supply device is a low dropout regulator.

14. Metal detection apparatus according to anyone of the preceding claims, **characterised in that**
the apparatus, particularly a frequency generator that provides the input signal, and the channel selector (140) are controllable by a control program implemented in a computer system with which operating frequencies and associated excitation circuits (14A, 14B, 14C) are selectable.

15. Metal detection apparatus according to claim 13, **characterised in that** the control program is designed such that within a process of measuring conveyed goods the operating frequencies and the associated excitation circuits (14A, 14B, 14C) are alternatingly changed or keyed between at least two settings or operating frequencies.
